# EUROPEAN PATENT APPLICATION

(11) **EP 4 807 424 A1**
(43) Date of publication of application: **16.09.2026**
(21) Application number: 24894041.3
(22) Date of filing: 12.11.2024
(51) Int. Cl.: G02B 21/06

(54) **SELECTIVE IRRADIATION CONTROL DEVICE, SELECTIVE IRRADIATION CONTROL METHOD, PROGRAM, AND SELECTIVE IRRADIATION SYSTEM**

(30) Priority: 22.11.2023 JP 2023198583
(71) Applicant: Hiroshima University, Higashihiroshima-shi Hiroshima 739-8511 (JP); NATIONAL UNIVERSITY CORPORATION SHIZUOKA UNIVERSITY, Shizuoka-shi, Shizuoka 422-8529 (JP)
(72) Inventor: SUGI Takuma, Higashihiroshima-shi, Hiroshima 739-8511 (JP); INOUE Tomoyoshi, Higashihiroshima-shi, Hiroshima 739-8511 (JP); IMAMURA Ryuki, Higashihiroshima-shi, Hiroshima 739-8511 (JP); HIROSE Marie, Higashihiroshima-shi, Hiroshima 739-8511 (JP); USUKI Shin, Hamamatsu-shi, Shizuoka 432-8561 (JP)
(74) Representative: Caspary, Karsten
(86) International application number: PCT/JP2024/040065
(87) International publication number: WO 2025/110049

(57) **Abstract**

This selective irradiation control device (110) controls a spatial light modulator (64), which spatially modulates incident light to form an arbitrary spatial light pattern, to selectively irradiate an object with the light. The selective irradiation control device (110) comprises: a light field image analysis unit (30) that analyzes a light field image obtained by imaging an object with a light field camera (10) temporally continuously, and tracks the three-dimensional space position of the object in the light field image; and a spatial light modulator control unit (40) that generates a computer hologram for forming a spatial light pattern for selectively irradiating, with light, the three-dimensional space position of the object tracked by the light field image analysis unit (30), and imparts the generated computer hologram to the spatial light modulator (64).

## Description

### TECHNICAL FIELD

The present invention relates to a selective irradiation control device, a selective irradiation control method, a program, and a selective irradiation system, and more particularly to a selective irradiation technique for acquiring and tracking a three-dimensional spatial position of a target object in an image from a light field image that records a light space, i.e. light field, and selectively irradiating the target object with light.

### BACKGROUND ART

High-speed and large-scale three-dimensional imaging is required for delicate and dynamic observation of biomolecules and intracellular behaviors. In general, such three-dimensional images are generated by using a confocal microscope to continuously change the focal position with respect to a sample in the depth direction, i.e. Z direction, at a predetermined pitch, and capturing images of the sample at each focal position (see, for example, Patent Documents 1 and 2). In addition, a spinning disk confocal microscope is available as a microscope that enables three-dimensional imaging. The spinning disk confocal method involves irradiating a rotating disk on which a large number of pinholes are arranged with laser light to create a plurality of parallel beams, which are then used to scan a sample at high speed to form a confocal image.

### CITATION LIST

### PATENT LITERATURE

Patent Literature 1: Japanese Unexamined Patent Application Publication No. 2011-044016
Patent Literature 2: Japanese Unexamined Patent Application Publication No. 2014-157158

### SUMMARY OF THE INVENTION

### TECHNICAL PROBLEM

Three-dimensional imaging by a confocal microscope requires scanning in the depth direction, which takes time for measurement and is not suitable for observing high-speed events. For example, when imaging a three-dimensional space by performing 30 scans in the Z direction at 30 fps, the imaging speed of the entire three-dimensional space is 30 fps / 30 = 1 vps, requiring one second to capture the three-dimensional space. Since neural activity is a phenomenon on the order of milliseconds, three-dimensional imaging by a confocal microscope is insufficient in terms of speed for the purpose of observing biomolecules and intracellular behaviors.

In addition, since the data size per unit volume of three-dimensional imaging is very large, the data size of such volumetric images as temporally continuous moving image data can reach the order of several terabytes. Such large-scale data takes an extremely long time to transmit even using wired communication with a high transmission speed, and there is a risk that it may become practically impossible to transmit using wireless communication, which has a lower transmission speed.

Another option for three-dimensional imaging is a light field microscope (LFM). A light field represents a collection of light rays in three-dimensional space. An LFM is configured by placing a microlens array, in which a large number of microlenses are arranged two-dimensionally, at an intermediate image plane, so that a light field can be recorded by obtaining the passing positions of light rays on the aperture stop of the objective lens and the acquisition positions of light rays on the image sensor. From a light field image recorded by an LFM, sub-aperture images corresponding to small-aperture lenses can be obtained. A sub-aperture image is a partial image of a subject captured from a shifted viewpoint, and each has a deep depth of field due to the pinhole effect while also having parallax with other sub-aperture images. Therefore, by shifting and superimposing sub-aperture images, an image refocused at a specified depth position can be reconstructed based on backward ray tracing.

An LFM is capable of capturing a three-dimensional image at high speed in a single shot without scanning in the depth direction, making it suitable for observing high-speed events. In terms of data size as well, since a light field image itself is a two-dimensional image, the data size is small, and the data size of temporally continuous moving image data thereof is also small.

In addition, when it is desired to observe a target object more prominently in the observation of biomolecules and intracellular behaviors, or in the field of optogenetics, it is important to irradiate the three-dimensional spatial position of the target object with light in a pinpoint manner.

Therefore, an objective of the present invention is to track the three-dimensional spatial position of a minutely small moving target object such as a biomolecule or a cell at high speed and to selectively irradiate the target object with light.

### SOLUTION TO THE PROBLEM

According to one aspect of the present invention, there is provided a selective irradiation control device that controls a spatial light modulator that spatially modulates incident light to form a spatial light pattern, thereby selectively irradiating a target object with light, the device comprising: a light field image analyzer configured to analyze a light field image obtained by continuously capturing images of the target object over time with a light field camera, and track a three-dimensional spatial position of the target object in the light field image; and a spatial light modulator controller configured to generate a computer-generated hologram for forming a spatial light pattern that selectively irradiates the three-dimensional spatial position of the target object tracked by the light field image analyzer with light, and provide the generated computer-generated hologram to the spatial light modulator, as well as a selective irradiation control method and a computer program corresponding thereto.

According to another aspect of the present invention, there is provided a selective irradiation system comprising: the selective irradiation control device described above; a light field camera configured to capture a light field image of a target object and supply the light field image to the selective irradiation control device; a wide-field illumination subsystem having a light source and an optical system, and configured to illuminate the entire field of view of the light field camera; and a selective irradiation subsystem having a light source, an optical system, and a spatial light modulator controlled by the selective irradiation control device, and configured to selectively irradiate the target object with light.

### ADVANTAGEOUS EFFECTS OF THE INVENTION

According to the present invention, the three-dimensional spatial position of a target object can be acquired and tracked at high speed based on a light field image capturing the target object, and the target object can be irradiated with light in a pinpoint manner at high speed.

### BRIEF DESCRIPTION OF THE DRAWINGS

[FIG. 1] is a schematic diagram of a selective irradiation system according to an embodiment of the present invention.
[FIG. 2] is a block diagram of a selective irradiation control device according to an embodiment of the present invention.
[FIG. 3] is a diagram showing (a) a light field image, (b) a collection of element images, and (c) a reconstructed image according to an example.
[FIG. 4] is a diagram schematically showing the geometric relationship of parameters of a light field camera according to an example.
[FIG. 5] is a diagram explaining the relationship between the PQ array and the superimposition of element images.
[FIG. 6A] is the first half of a flowchart of light field image analysis.
[FIG. 6B] is the second half of a flowchart of light field image analysis.
[FIG. 7] is a diagram explaining an example of three-dimensionally reconstructing a target object from the first collection of element images to perform bright spot labeling, initial coordinates setting of the target object, and template selection.
[FIG. 8] is a diagram explaining the identification of representative points of bright spots in a collection of element images.
[FIG. 9] is a diagram explaining the tracking of representative points of bright spots in a collection of element images.
[FIG. 10] is a diagram explaining bright spot labeling in a collection of element images.
[FIG. 11] is a diagram explaining template selection when there is a plurality of bright spots in one element image and bright spot labeling in the second and subsequent collections of element images.
[FIG. 12] is a diagram explaining the intervals between representative points of bright spots between adjacent element images in a collection of element images.
[FIG. 13] is a graph showing the tracking performance in the Z direction.
[FIG. 14] is a diagram showing how the light field image analyzer tracks a target object.
[FIG. 15] is a flowchart of spatial light modulator control.
[FIG. 16] is a microscope image and a profile graph of pixel values in the vicinity of a target object with and without selective irradiation.
[FIG. 17] is another microscope image and a profile graph of pixel values in the vicinity of a target object with and without selective irradiation.

### DETAILED DESCRIPTION OF THE INVENTION

Hereinafter, embodiments of the present invention will be described in detail with reference to the drawings as appropriate. However, unnecessarily detailed descriptions may be omitted. For example, detailed descriptions of already well-known matters and redundant descriptions of substantially the same configurations may be omitted. This is to avoid the following description from becoming unnecessarily redundant and to facilitate understanding by those skilled in the art. The inventor provides the attached drawings and the following description for those skilled in the art to fully understand the present invention, and does not intend to limit the subject matter described in the claims thereby. In addition, the dimensions of each member depicted in the drawings and detailed shapes may differ from actual ones.

### [Example of Selective Irradiation System]

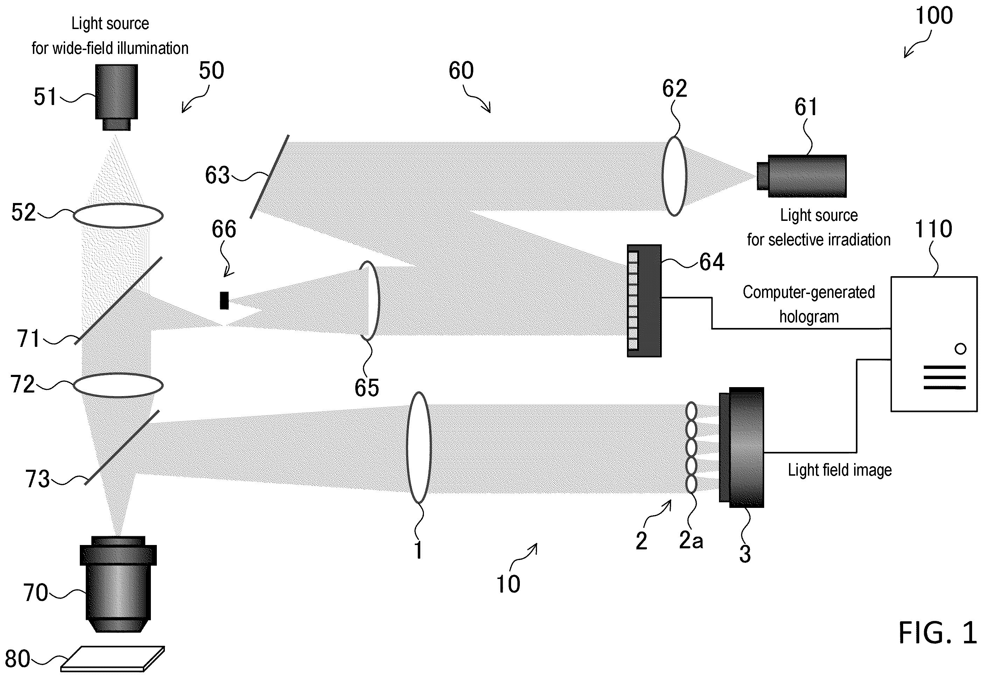

FIG. 1 is a schematic diagram of a selective irradiation system according to an embodiment of the present invention. The selective irradiation system 100 according to the present embodiment is capable of irradiating minute target objects such as biomolecules and cells observed through an objective lens with fluorescence excitation light, activation light, or the like in a pinpoint manner. In general, the selective irradiation system 100 includes a light field camera 10, a wide-field illumination subsystem 50, a selective irradiation subsystem 60, an objective lens 70, a selective irradiation control device 110, and several other optical components. For convenience of explanation, it is assumed that a sample containing the target object is prepared in a sample holder 80 such as a slide glass or a petri dish and placed on a stage (not shown), and the objective lens 70 is disposed above the sample holder 80.

The wide-field illumination subsystem 50 includes a light source 51 and a collimator lens 52. The light source 51 is a light source that supplies light for illuminating the entire field of view of the light field camera 10. The light emitted from the light source 51 may be natural light including white light or infrared light, or may be laser light of a specific wavelength for causing the target object to fluoresce, for example, laser light with a wavelength of 470 nm or 550 nm. The collimator lens 52 collimates the light emitted from the light source 51. A half mirror 71, a lens 72, a dichroic mirror 73, and an objective lens 70 are sequentially disposed in front of the collimated light in its direction of travel. Of these, the half mirror 71 and the dichroic mirror 73 transmit the wavelength range of light from the light source 51. The light collimated by the collimator lens 52 passes through the half mirror 71, the lens 72, and the dichroic mirror 73, enters the objective lens 70, and uniformly illuminates the sample holder 80 as a whole. The wide-field illumination subsystem 50 illuminates the entire field of view of the light field camera 10.

The selective irradiation subsystem 60 includes a light source 61, a collimator lens 62, a mirror 63, a spatial light modulator 64, a Fourier transform lens 65, and a DC component removal filter 66. The light source 61 is a light source that supplies light to be irradiated onto the target object in a sample in the sample holder 80 in order to cause the target object to fluoresce or be photoactivated. The wavelength of the laser light emitted from the light source 61 may be the same as that of the light source 51, or may be a different wavelength, for example, laser light with a wavelength of 473 nm. By adopting a different wavelength from the light of the light source 51, it is possible to cause the half mirror 71 to transmit the light from the light source 51 and reflect the light from the spatial light modulator 64. It is desirable to adopt the light source 61 with as good coherence as possible, for example, a solid-state or gas laser light source. The collimator lens 62 collimates the laser light emitted from the light source 61. The mirror 63 and the spatial light modulator 64 are sequentially disposed in front of the collimated laser light in its direction of travel. The laser light collimated by the collimator lens 62 is reflected by the mirror 63 and enters the spatial light modulator 64.

The spatial light modulator 64 is a device that spatially modulates incident light by modulating the phase or intensity of the incident light to form a spatial light pattern, specifically, a reflective Liquid Crystal on Silicon Spatial Light Modulator (LCOS-SLM). The spatial light pattern formed by the spatial light modulator 64 is determined by the computer-generated hologram provided to it. As will be described later, a computer-generated hologram (CGH) is provided to the spatial light modulator 64 from the selective irradiation control device 110.

The Fourier transform lens 65, the DC component removal filter 66, the half mirror 71, the lens 72, the dichroic mirror 73, and the objective lens 70 are sequentially disposed in front of the light modulated by the spatial light modulator 64 in its direction of travel. The half mirror 71 reflects the wavelength range of the laser light of the light source 61, and the dichroic mirror 73 transmits it. This optical system transfers the image of the pupil plane of the objective lens 70 to the modulation plane of the spatial light modulator 64. The DC component removal filter 66 is disposed at the focal length of the Fourier transform lens 65, and removes the DC component of the light modulated by the spatial light modulator 64, that is, the light that is not modulated by the spatial light modulator 64 and causes the formation of unwanted images. With the configuration described above, the selective irradiation subsystem 60 is capable of forming a desired light pattern on the sample in the sample holder 80 and irradiating the target object in the sample with light in a pinpoint manner.

The light field camera 10 includes an imaging lens (or tube lens) 1, a microlens array 2, and an image sensor 3. The objective lens 70, the dichroic mirror 73, the imaging lens 1, and the microlens array 2 are sequentially disposed in front of the fluorescence from the sample in the sample holder 80 in its direction of travel. The dichroic mirror 73 reflects the wavelength range of the fluorescence from the sample. The microlens array 2 is configured by arranging a plurality of microlenses (or lenslets) 2a two-dimensionally, and is disposed between the imaging lens 1 and the image sensor 3, specifically at the location of the image formed by the objective lens 70 and the imaging lens 1. The image sensor 3 is a CCD sensor, a CMOS sensor, or the like, configured by arranging two-dimensionally a plurality of light-receiving elements (not shown) that photoelectrically convert input light and output electrical signals. The electrical signals output from each light-receiving element are converted into digital data by an A/D converter (not shown), and a light field image is output from the light field camera 10. The light field image is supplied to the selective irradiation control device 110.

### [Example of Selective Irradiation Control Device]

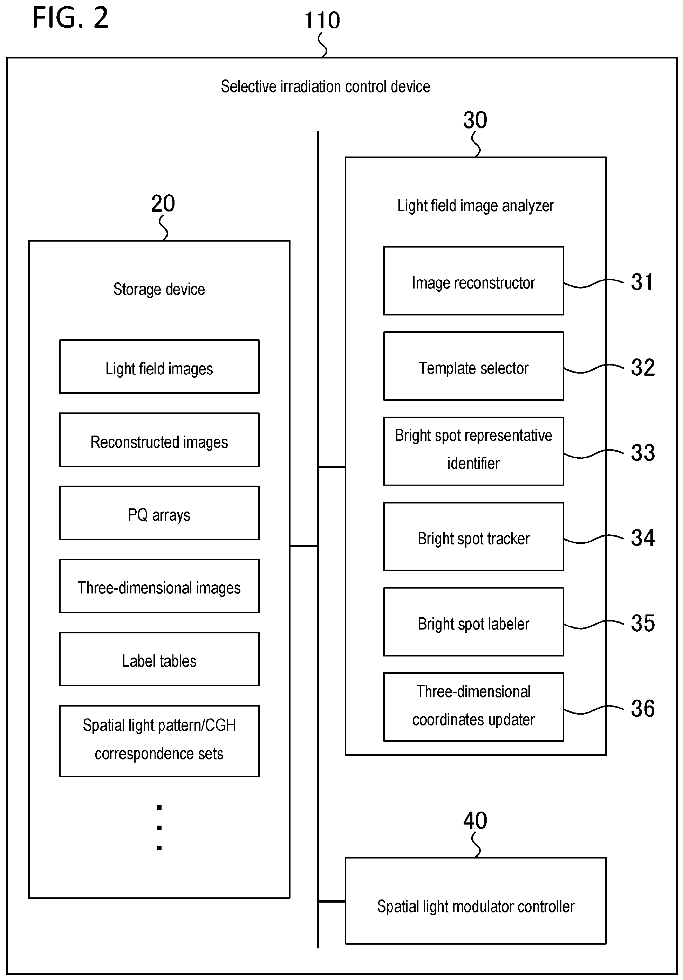

The selective irradiation control device 110 can be configured as a computer device including a storage device and a processor. FIG. 2 is a block diagram of a selective irradiation control device according to an embodiment of the present invention. The selective irradiation control device 110 includes a storage device 20, a light field image analyzer 30, and a spatial light modulator controller 40 as its main components. These components are communicably connected to each other and can exchange data.

The storage device 20 is a collection of storage devices such as RAM, ROM, SSD, and HDD. The RAM is used mainly as working memory when the selective irradiation control device 110 performs various computational processes, and also temporarily stores light field images that are continuously captured over time by the light field camera 10 and supplied to the selective irradiation control device 110, as well as reconstructed images, three-dimensional images, and label tables generated and used in image analysis described later. The ROM, SSD, and HDD mainly store, on a long-term basis, computer programs for causing the computer to operate as the light field image analyzer 30 and the spatial light modulator controller 40, or computer programs stored in a computer-readable non-transitory recording medium, as well as PQ arrays referenced by the light field image analyzer 30 and spatial light pattern/computer-generated hologram correspondence sets referenced by the spatial light modulator controller 40.

The light field image analyzer 30 is a module that analyzes light field images that are continuously captured over time by the light field camera 10 and buffered in the storage device 20, and tracks the three-dimensional spatial position of the target object in the light field images. More specifically, the light field image analyzer 30 includes an image reconstructor 31, a template selector 32, a bright spot representative identifier 33, a bright spot tracker 34, a bright spot labeler 35, and a three-dimensional coordinates updater 36.

The spatial light modulator controller 40 is a module that generates a computer-generated hologram for forming a spatial light pattern that selectively irradiates the three-dimensional spatial position of the target object tracked by the light field image analyzer 30 with light, and provides the generated computer-generated hologram to the spatial light modulator 64.

The light field image analyzer 30 and the spatial light modulator controller 40 can be realized as hardware such as an ASIC or FPGA, or as software that executes a computer program stored in a recording medium (not shown) or the storage device 20 on a processor (not shown) such as a CPU or GPU included in the control device 110. They can also be realized by an appropriate combination of hardware and software.

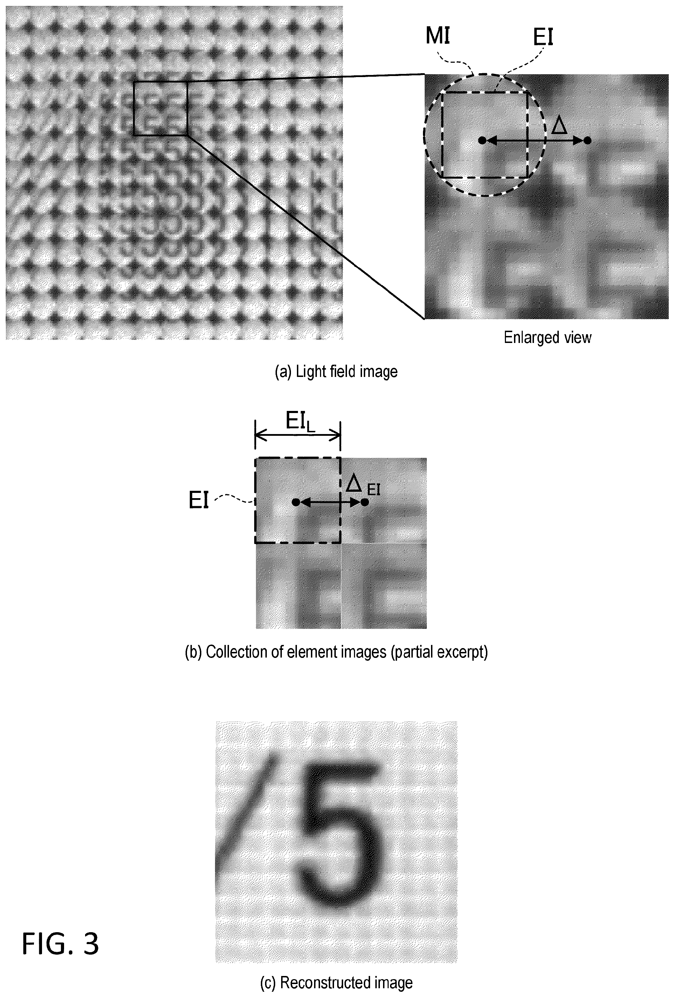

The light field image to be analyzed by the image analyzer 30 includes a collection of element images in which a plurality of element images capturing the same subject from a plurality of viewpoints shifted from each other are arranged. From such a collection of element images, an image refocused at a specified depth position can be reconstructed by utilizing the parallax of each element image included therein. FIG. 3 is a diagram showing a light field image, a collection of element images, and a reconstructed image according to an example. The light field image (a) is captured by placing a sheet on which the characters "/5" are written at a position shifted from the focal plane of the light field camera 10. The light field image is a collection of microlens images in which a large number of microlens images MI captured by each microlens 2a of the microlens array 2 of the light field camera 10 are arranged in a square lattice pattern. The shape of each microlens image MI is substantially circular, as indicated by the broken lines, reflecting the circular shape of each microlens 2a. A light field image is a collection of a plurality of sub-images (microlens images MI in the example of FIG. 3) obtained by capturing the same subject from a plurality of viewpoints shifted from each other.

Since the vicinity of the boundaries of the microlens image MI is dark due to a small amount of light, and the distortion is large because light rays passing through the edge portions of the microlens 2a are captured, the central portion of the microlens image MI is used. That is, from each substantially circular microlens image MI, for example, a square region inscribed in the circle is cut out as an element image EI, and a collection of element images (b) is an arrangement of these element images EI in a square lattice pattern.

As described above, since the sheet on which the characters "/5" are written is at a position shifted from the focal plane of the light field camera 10, microlens images obtained by partially capturing the characters "/5" with shifted viewpoints by each microlens 2a, that is, microlens images having parallax, are recorded in the light field image (a). For example, focusing on the upper left corner portion of the character "5," light rays emitted from that portion of the subject are recorded with an interval Δ between adjacent microlens images. As shown in the collection of element images (b), the interval Δ between microlens images becomes Δ_{EI} between element images. Here, when the pitch of the microlens 2a is MLP and the length of one side of the element image is EI_{L}, Δ_{EI} is expressed by the following equation (1): ${Δ}_{EI} = Δ - \left(MLP-{EI}_{L}\right)$

By shifting and superimposing adjacent element images in the collection of element images by a shift amount corresponding to the parallax, a reconstructed image (c) is obtained. In the example of FIG. 3, by shifting and superimposing adjacent element images by Δ_{EI}, a reconstructed image (c) refocused at the position of the sheet on which the characters "/5" are written is obtained. In this manner, by shifting and superimposing element images by appropriately changing the shift amount, an image refocused at an arbitrary depth position can be reconstructed from the acquired image based on backward ray tracing.

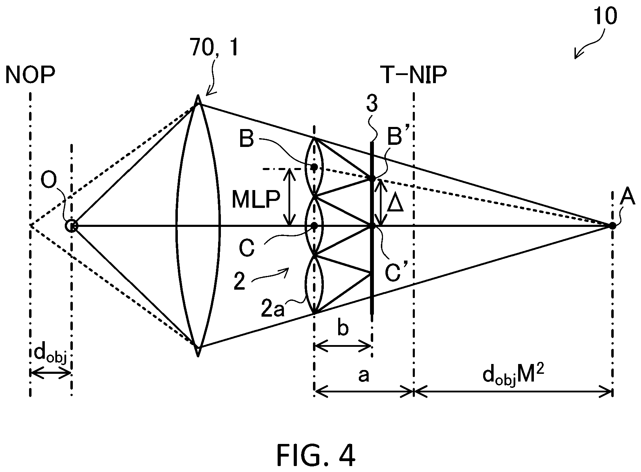

Here, regarding the target object to be refocused, when the depth, which is a shift from the object-side focal plane NOP (Native Object Plane) of the objective lens, is d_{obj}, the relationship between the interval Δ of light rays originating from a same point between adjacent microlens images and the depth dobj of that point can be expressed using parameters of the light field camera 10. FIG. 4 is a diagram schematically showing the geometric relationship of parameters of the light field camera 10 according to an example. For convenience, FIG. 4 shows the objective lens 70 and the imaging lens 1 shown in FIG. 1 as a single unit. In the figure, O is the target object at the position of depth d_{obj}, "A" is the image point of the target object O by the objective lens 70 and the imaging lens 1, B and C are the centers of adjacent microlenses 2a, and B' and C' are the positions of light rays from the target object O captured by the image sensor 3 via B and C. When focusing on triangle ABC and triangle AB'C' in the figure, from the similarity relationship of triangles,
BC : $B ′ C ′ = CA : C ′ A$
When this is expressed by parameters,
MLP : $Δ = \left(a+{d}_{obj}{M}^{2}\right) : \left(a+{d}_{obj}{M}^{2}-b\right)$
Solving this for Δ yields the following equation (2): $Δ = MLP \left(1-b/\left({d}_{obj}{M}^{2}-a\right)\right)$
where MLP: pitch of the microlens 2a, M: magnification of the objective lens 70, a: distance from the image-side focal plane T-NIP (Native Image Plane) of the imaging lens 1 to the center of the microlens 2a, b: distance from the center of the microlens 2a to the image sensor 3. Note that in FIG. 4, "a" is considered as a positive value to show the geometric relationship, but when the direction from the object side to the image side is taken as positive, "a" needs to be considered as a negative value. Therefore, in equation (2), "a" is finally replaced with "-a."

Note that since there is no anisotropy with respect to two directions , i.e. X direction and Y direction, perpendicular to each other in a plane perpendicular to the depth direction, i.e. Z direction, the same Δ can be applied to the X direction and the Y direction, respectively.

The relationship between d_{obj} and Δ_{EI} is determined from equations (1) and (2). Therefore, to reconstruct an image refocused at a specified depth position , i.e. depth d_{obj}, element images should be shifted and superimposed by the shift amount Δ_{EI} determined by equations (1) and (2). Superimposition of element images can be easily performed by referring to the PQ array described below.

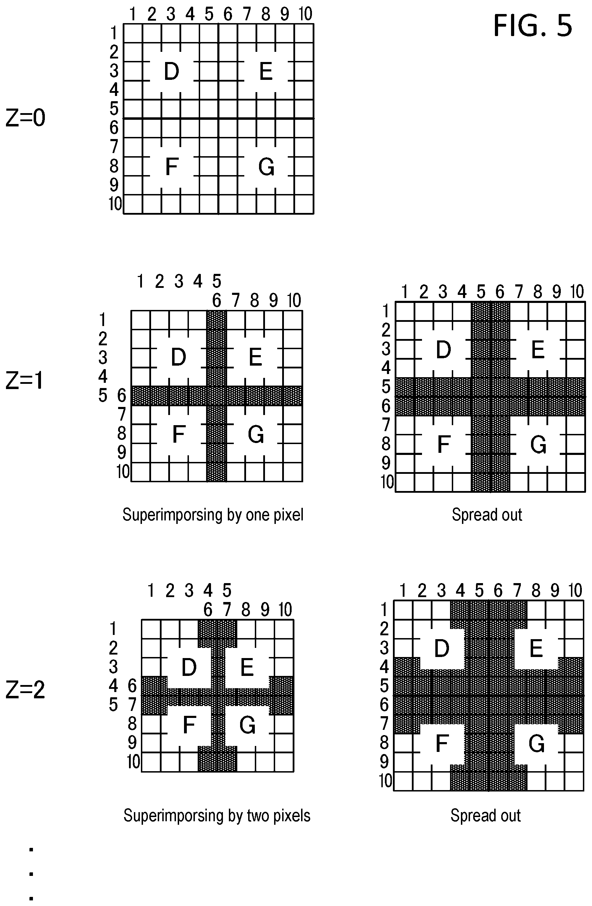

FIG. 5 is a diagram explaining the relationship between the PQ array and the superimposition of element images. Overlapping pixels are displayed with shading, the left column shows the state where element images are overlapped, and the right column shows the state where the overlapping of element images is spread out. For convenience, the collection of element images consists of a total of four element images D, E, F, and G in two rows and two columns, and the size of each element image is 5 pixels in both vertical and horizontal directions. The arrangement relationship of the element images is such that the element image E is placed to the right of the element image D, the element image F is placed below the element image D, and the element image G is placed below the element image E, that is, to the right of the element image F. Serial numbers starting from 1 are assigned to rows and columns to refer to each pixel in the collection of element images. For example, pixels belonging to the element image D are referred to in a range from row 1 to row 5 and from column 1 to column 5, and pixels belonging to the element image G are referred to in a range from row 6 to row 10 and from column 6 to column 10. Hereinafter, pixel [m, n] refers to a pixel located in row m and column n in the collection of element images.

Z in the figure is a depth parameter representing d_{obj}. For convenience, d_{obj} and the shift amount Δ_{EI} of element images are represented by the same Z value. That is, when Z = n, d_{obj} = n, representing that the shift amount Δ_{EI} of element images is n pixels.

When Z = 0, that is, at depth d_{obj} = 0, the collection of element images becomes the reconstructed image as is, without superimposing element images.

When Z = 1, that is, to reconstruct an image refocused at depth d_{obj} = 1, adjacent element images are shifted by 1 pixel and superimposed. Which pixels in the collection of element images are to be superimposed can be easily determined by referring to the PQ array that indicates how to superimpose pixels. The PQ array is a representation of row numbers or column numbers of pixels in the collection of element images folded back in units of element images, and as shown in the figure, for example, the PQ array corresponding to Z = 1 is expressed as follows:

| | | | | | | | | |
|---|---|---|---|---|---|---|---|---|
| 1 | 2 | 3 | 4 | 5 | | | | |
| | | | | 6 | 7 | 8 | 9 | 1 0 |

This PQ array means that pixels in row 5 (column 5) and pixels in row 6 (column 6) overlap. By preparing such PQ arrays for each Z value in advance and storing them in the storage device 20, pixel superimposition can be executed by referring to the PQ array corresponding to the Z value.

When Z = 2, that is, to reconstruct an image refocused at depth d_{obj} = 2, adjacent element images are shifted by 2 pixels and superimposed. As shown in the figure, for example, the PQ array corresponding to Z = 2 is expressed as follows:

| | | | | | | | |
|---|---|---|---|---|---|---|---|
| 1 | 2 | 3 | 4 | 5 | | | |
| | | | 6 | 7 | 8 | 9 | 1 0 |

This PQ array means that pixels in rows 4 and 5 (columns 4 and 5) and pixels in rows 6 and 7 (columns 6 and 7) overlap each other, respectively.

Note that there may be cases where three or more element images overlap in the column direction and the row direction, in which case the PQ array is composed of three or more rows. In addition, when the rows and columns of element images are composed of the same number of pixels as in the above example, a common PQ array can be used for superimposition of element images in the row direction and superimposition in the column direction, but when the number of pixels in the rows and columns of element images are different from each other, it is necessary to prepare a PQ array for the row direction and a PQ array for the column direction.

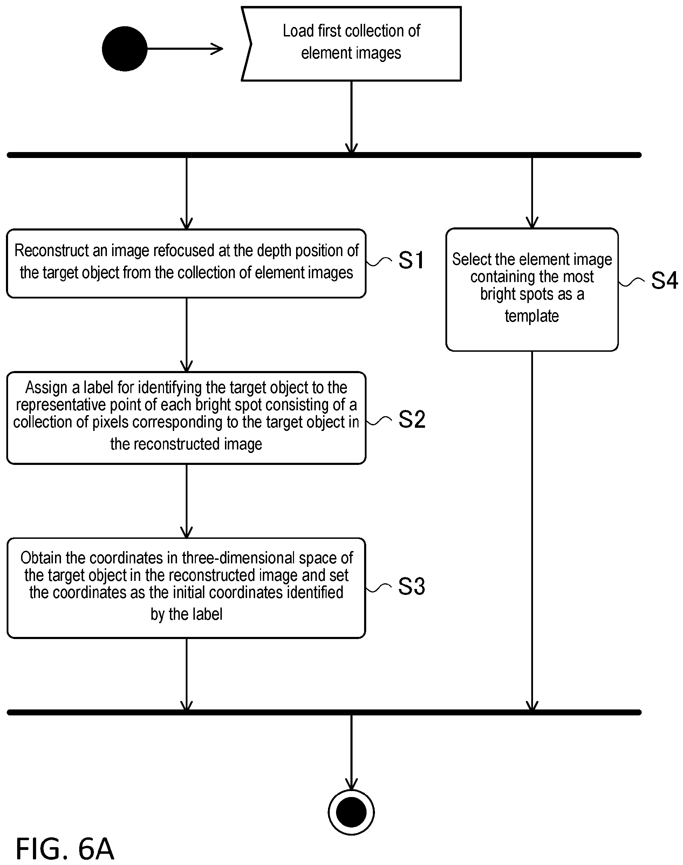

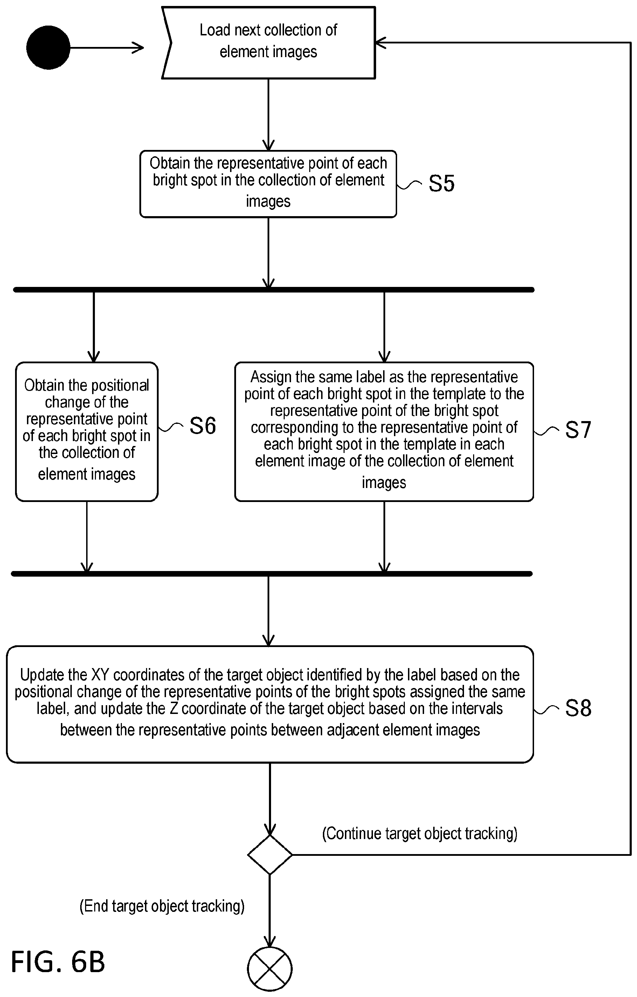

Next, image analysis by the light field image analyzer 30 will be described. FIG. 6A is the first half of a flowchart of light field image analysis, and shows the image analysis procedure for the first, corresponding to time t = 1, collection of element images. FIG. 6B is the second half of the flowchart of light field image analysis, and shows the image analysis procedure for the second and subsequent, corresponding to time t = 2 and later, collections of element images. Each step is executed by the above-described components of the light field image analyzer 30.

When the collection of element images of the first light field image is read out from the storage device 20 to the light field image analyzer 30, the image reconstructor 31 reconstructs an image refocused at the depth position of the target object from the collection of element images (S1). When the reconstructed image is generated, the bright spot labeler 35 assigns a label for identifying the target object to the representative point of each bright spot consisting of a collection of pixels corresponding to the target object in the reconstructed image (S2). The term "bright spot" as used herein refers to a collection of one or more pixels having a certain luminance or pixel value, that is, a point or small image region having a certain brightness. In the selective irradiation system 100, the entire field of view of the light field camera 10 is illuminated with light of a predetermined wavelength by the wide-field illumination subsystem 50, so that the target object fluoresces and bright spots are easily captured. When the labeling is complete, the three-dimensional coordinates updater 36 obtains the coordinates in three-dimensional space of the target object in the reconstructed image and sets the coordinates as the initial coordinates of the target object identified by the label (S3). In parallel with or asynchronously with these steps S1 through S3, the template selector 32 selects, as a template, the element image containing the most bright spots from the collection of element images (S4).

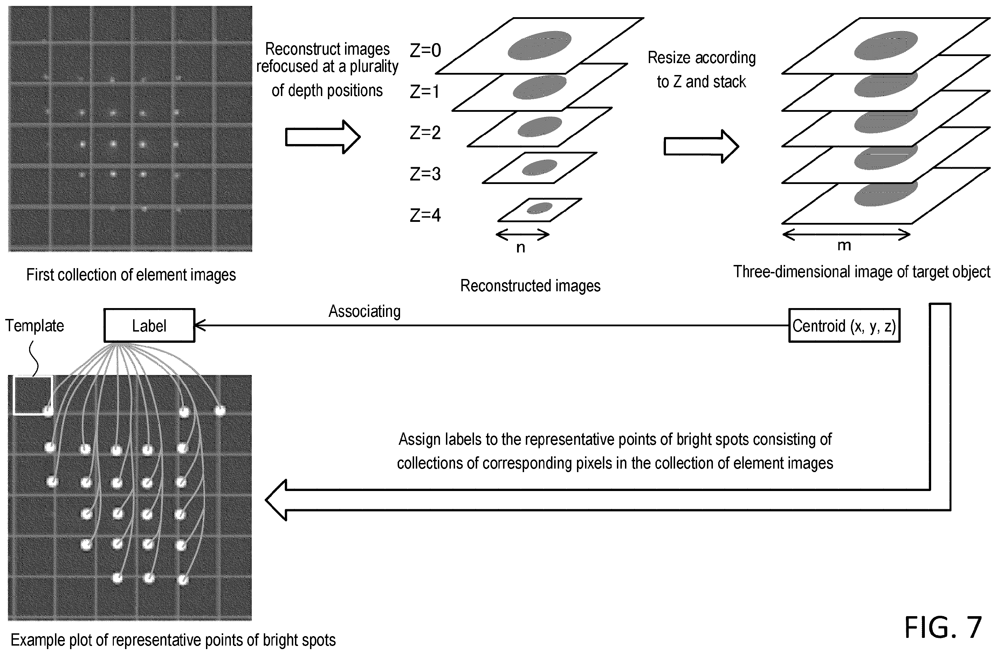

FIG. 7 is a diagram explaining an example of three-dimensionally reconstructing a target object from the first collection of element images to perform bright spot labeling, initial coordinates setting of the target object, and template selection. For example, the image reconstructor 31 reconstructs images refocused at a plurality of depth positions by shifting and superimposing element images in the collection of element images by shift amounts corresponding to the depth positions, while appropriately referencing the PQ arrays stored in the storage device 20. As the depth d_{obj} increases, the shift amount Δ_{EI} of the element images increases, and the size of the reconstructed image decreases accordingly. The image reconstructor 31 resizes the reconstructed images, which differ in size depending on the depth position, according to the depth position, and stacks them in the Z direction, i.e. depth direction, to reconstruct a three-dimensional image of the target object. Note that, as a method for reconstructing an image refocused at a specified depth position from the collection of element images, a high-resolution image can be reconstructed by using the optical sectioning technique disclosed in the application by the inventors of the present invention (Japanese Patent Application No. 2022-202566).

In order to identify pixels in the collection of element images that correspond to the three-dimensional image, for example, the bright spot labeler 35 multiplies the XY coordinates of each voxel of the three-dimensional image by the resize ratio of the image at each depth position to convert them into pixel coordinates of the first collection of element images. For example, if the size of an image at a certain Z coordinate in the three-dimensional image is m and the size of that image before resizing is n, the XY coordinates of each voxel at that Z coordinate can be converted into the corresponding pixel coordinate in the first collection of element images by multiplying by the resize ratio n/m. However, the coordinates of other pixels overlapping the converted pixel coordinates are not known. Therefore, the bright spot labeler 35 references the PQ array to identify the coordinates of other pixels to be superimposed on the pixel at the converted pixel coordinates when reconstructing an image refocused at that depth position, and assigns a label for identifying the target object to the representative point of each bright spot consisting of the pixel at the converted pixel coordinates and the collection of pixels to be superimposed on that pixel when reconstructing an image refocused at that depth position. For example, each pixel constituting a bright spot can be binarized, its centroid can be obtained, and the centroid can be used as the representative point of that bright spot. The same label is assigned to the representative points of bright spots corresponding to the same three-dimensional image.

The correspondence between labels and the representative points of each bright spot is tabulated and stored in the storage device 20 as a label table. In addition, the three-dimensional coordinates of the target object are associated with the label. Specifically, the three-dimensional coordinates updater 36 obtains the voxel coordinates of the three-dimensional image and also obtains, for example, the centroid of the three-dimensional image as the coordinates in there-dimensional space, and sets the centroid as the initial coordinates of the target object identified by the label.

In parallel with or asynchronously with the image reconstruction, bright spot labeling, and initial coordinates setting of the target object described above, the template selector 32 selects the element image containing the most bright spots as a template. For convenience, since there is one target object in the example of FIG. 7, the number of bright spots in each element image is one. When there is a plurality of element images that are candidates for the template, the element image closest to the origin in the collection of element images, that is, the element image located at the uppermost left, can be selected as the template. The template is referenced in the bright spot labeling process for the second collection of element images. This completes the analysis process for the first collection of element images.

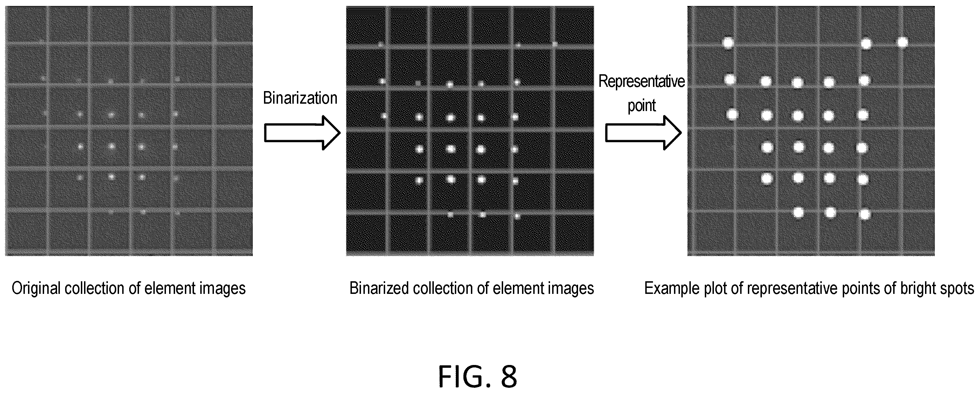

Returning to FIG. 6B, when the collection of element images in the next light field image is read out from the storage device 20 to the light field image analyzer 30, the bright spot representative identifier 33 obtains the representative point of each bright spot in the collection of element images (S5). FIG. 8 is a diagram explaining the identification of representative points of bright spots in a collection of element images. Since the collection of element images is a grayscale image, the bright spot representative identifier 33 binarizes the collection of element images after smoothing it with an averaging filter as necessary. Then, the bright spot representative identifier 33 obtains the centroid of each binarized bright spot and uses the centroid as the representative point of that bright spot. Thereafter, labeling and tracking are performed on the representative points of each bright spot.

The binarization threshold may be an appropriate fixed value or may be determined according to the characteristics of the collection of element images. In the latter case, first, the approximate ratio of pixels capturing the target object is calculated from the range of the field of view and the size of the target object. For example, when the field of view is 422.4 µm × 422.4 µm and the target object is a circle with a diameter of 4 µm, the ratio of pixels capturing the target object in the field of view, i.e. in the collection of element images, is approximately 0.0070%. Next, the pixel value of each pixel in the collection of element images and its frequency percentage are obtained, and the frequency is accumulated in descending order until the ratio of the number of pixels capturing the target object is reached, and the pixel value corresponding to the last added frequency is used as the threshold. For example, in the above example, the frequency is accumulated from the highest pixel value, and the pixel value when the cumulative value exceeds 99.993% is used as the threshold. Such a method of determining the threshold is effective when the contrast is high as in a microscope image, the background and the target object are clearly separated, and the ratio of the target object in the entire field of view is very small. If the target object can be observed in advance, the pixel values of the background and the target object may be obtained in advance using appropriate image analysis software, and those values may be used as the threshold. In addition, Otsu's binarization, which is a general automatic binarization method, is difficult to apply when the background and the target object are clearly separated and the ratio of the target object in the entire field of view is very small, but it may be applicable depending on the target object.

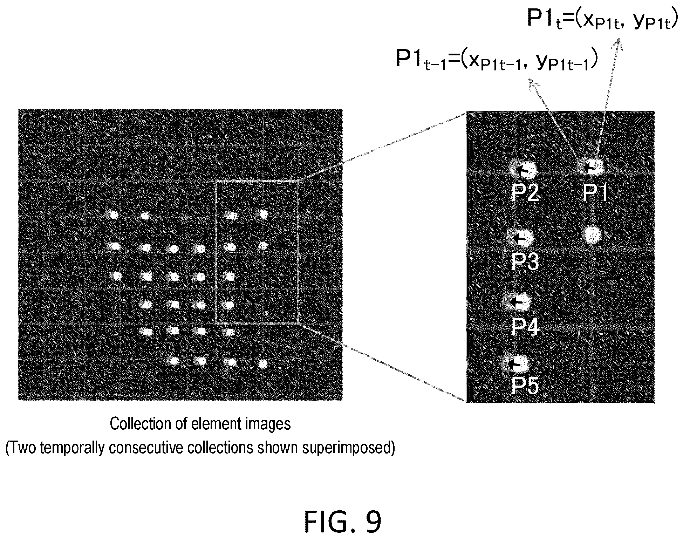

Returning to FIG. 6B, when the representative point of each bright spot in the element images is determined, the bright spot tracker 34 obtains the positional change of the representative point of each bright spot in the collection of element images (S6). FIG. 9 is a diagram explaining the tracking of representative points of bright spots in a collection of element images. For convenience, FIG. 9 shows two temporally consecutive collections of element images superimposed on each other. The bright spot tracker 34 finds the destination of the representative point of each bright spot by nearest neighbor search between temporally consecutive collections of element images. If the frame rate of the continuously captured light field images is sufficiently high relative to the movement speed of the target object, the displacement of the coordinates of the representative points of each bright spot between temporally consecutive collections of element images is very small, as shown in FIG. 9, and the destination of the representative point of each bright spot can be found by nearest neighbor search. For example, as shown in the enlarged view, for the representative points P1 through P5 of five bright spots, the destinations of those representative points are found by nearest neighbor search between temporally consecutive collections of element images. When the destination of the representative point of each bright spot is found, the bright spot tracker 34 obtains the positional change of the representative point of each bright spot from the positional relationship before and after the movement of the representative point of each bright spot. For example, for the representative point P1 of a bright spot, if the XY coordinates at time t-1 are P1ₜ₋₁ = (x_{P1t-1}, y_{P1t-1}) and the XY coordinates at time t are P1ₜ = (x_{P1t}, y_{P1t}), the positional change of P1 is expressed as P1ₜ - P1ₜ₋₁. Note that in the enlarged view, the representative point below P1 and to the right of P3 appears for the first time at time t and therefore cannot be tracked from time t-1 to time t. If this representative point continues to appear after time t, its position will be tracked.

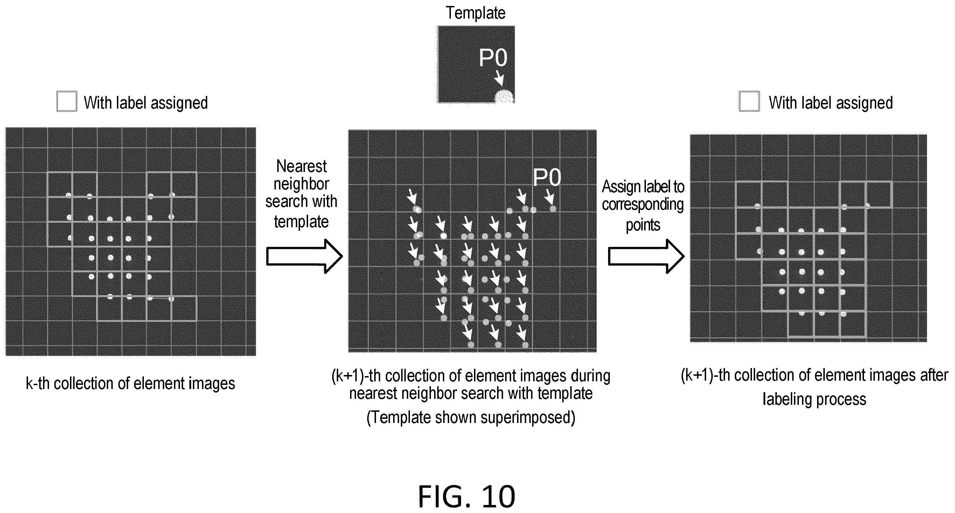

Returning to FIG. 6B, in parallel with the tracking of the representative points of each bright spot, the bright spot labeler 35 assigns the same label as the representative point of each bright spot in the template to the representative point of the bright spot corresponding to the representative point of each bright spot in the template in each element image of the collection of element images (S7). FIG. 10 is a diagram explaining bright spot labeling in a collection of element images. The left figure shows the k-th collection of element images, the center figure shows the (k+1)-th collection of element images in which nearest neighbor search is being performed for the representative points of bright spots using the template, and the right figure shows the (k+1)-th collection of element images after the labeling process. For convenience, it is assumed that there is one representative point of a bright spot in each element image, and that the same label is assigned to the representative point of each bright spot in the k-th collection of element images shown in the left figure. At this time, as shown in the center figure, the bright spot labeler 35 finds, by nearest neighbor search, the representative point of the bright spot corresponding to the representative point P0 of each bright spot in the template in each element image in the (k+1)-th collection of element images. For convenience, the template is shown superimposed on each element image in the (k+1)-th collection of element images in the center figure. In this example, since there is only one representative point of a bright spot in each element image, each of those representative points is found as the representative point corresponding to the representative point of the bright spot in the template. When the corresponding representative point of the bright spot is found in each element image, the bright spot labeler 35 assigns the same label as the corresponding representative point P0 of the bright spot in the template to the found representative point. As a result, as shown in the right figure, a label is assigned to the representative point of each bright spot in the (k+1)-th collection of element images. In this manner, a label is assigned to the representative point of each bright spot in the new collection of element images.

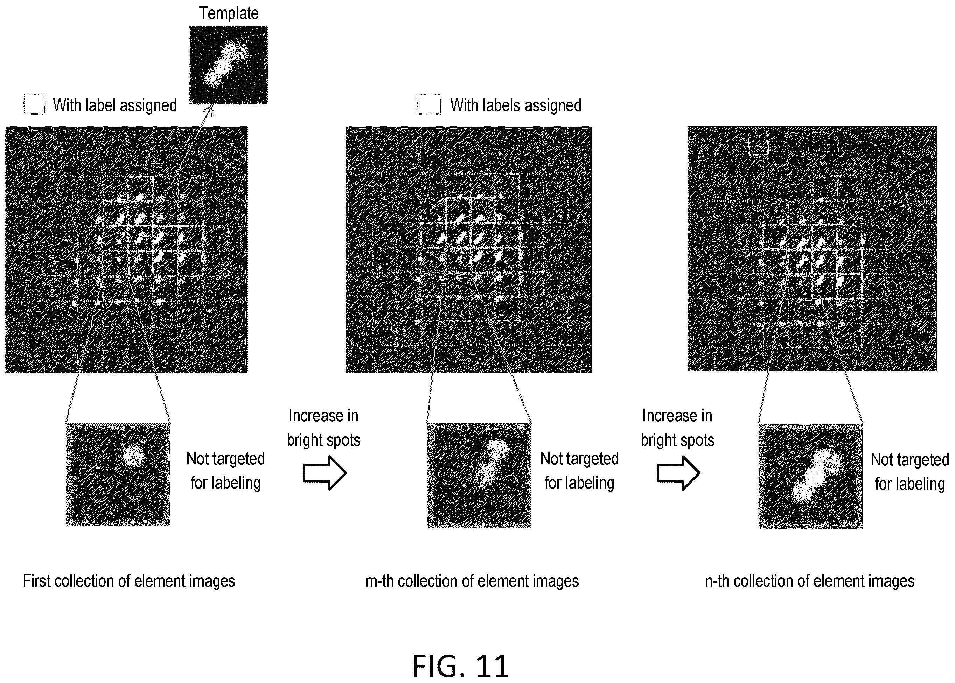

When there is a plurality of target objects, a plurality of bright spots originating from those target objects may be included in the element images. In such a case, the bright spot labeler 35 may target element images containing a predetermined number or more of bright spots for labeling. For example, if the number of bright spots in the template is N, element images containing N-1 or more bright spots are targeted for labeling. This reduces the number of element images to be labeled, thereby reducing the processing load associated with the labeling process. FIG. 11 is a diagram explaining template selection when there is a plurality of bright spots in one element image and bright spot labeling in the second and subsequent collections of element images. The left figure shows the first collection of element images, the center figure shows the m-th collection of element images, and the right figure shows the n-th (n > m) collection of element images. The template selector 32 selects the element image containing the most bright spots from the first collection of element images as the template. In this example, an element image containing four bright spots is selected as the template, but there is a plurality of such element images. In such a case, the template selector 32 selects the element image with the greatest degree of separation between bright spots as the template. If the degree of separation is expressed as SEP, SEP can be defined, for example, by the following equation: $SEP = {X}_{max} - {X}_{min} + {Y}_{max} - {Y}_{min}$ where Xₘₐₓ is the maximum X coordinate among the XY coordinates of the representative points of the plurality of bright spots included in the template candidate element image, Xₘᵢₙ is the minimum X coordinate, Yₘₐₓ is the maximum Y coordinate, and Yₘᵢₙ is the minimum Y coordinate.

As described above, when an element image is cut out from a microlens image, a partial region of the microlens image is cut off. However, when the target object moves, bright spots that were included in the cut-off region may move into the element image, causing the number of bright spots in the element image to increase over time, or conversely to decrease. For example, focusing on the element image shown enlarged in FIG. 11, the number of bright spots in that element image is one in the first collection of element images (see left figure), increases to two in the m-th collection of element images (see center figure), and increases tofour in the n-th collection of element images (see right figure). In the m-th collection of element images, the number of bright spots in that element image increases to two, but since this does not satisfy the condition of N-1 or more, that element image is not targeted for labeling. Subsequently, in the n-th collection of element images, when the number of bright spots in that element image increases to four, the condition of N-1 or more is satisfied, and that element image becomes targeted for labeling. For element images targeted for labeling, the bright spot labeler 35 assigns the same label as the representative point of each bright spot in the template to the representative point of the bright spot corresponding to the representative point of each bright spot in the template.

Returning to FIG. 6B, when the tracking and labeling of the representative points of each bright spot are complete, the three-dimensional coordinates updater 36 updates the XY coordinates of the target object identified by the label based on the positional change of the representative points of the bright spots assigned the same label, and also updates the Z coordinate of the target object based on the intervals between those representative points between adjacent element images (S8). For example, the XY coordinates of the target object at time t can be obtained by adding the average of the positional changes of the representative points of the bright spots assigned the same label from time t-1 to time t to the XY coordinates at time t-1. This can be expressed by the following equation: $\left({x}_{t}, {y}_{t}\right) = \left({x}_{t - 1}, {y}_{t - 1}\right) + \left〈{P}_{t}-{P}_{t - 1}\right〉$ where (xₜ, yₜ) are the XY coordinates of the target object at time t, (xₜ₋₁, yₜ₋₁) are the XY coordinates of the target object at time t-1, Pₜ is the XY coordinates of the representative points of the bright spots assigned the same label at time t, Pₜ₋₁ is the XY coordinates of the representative points of the bright spots assigned the same label at time t-1, and the operator 〈〉 represents the average value of each of the X and Y coordinates.

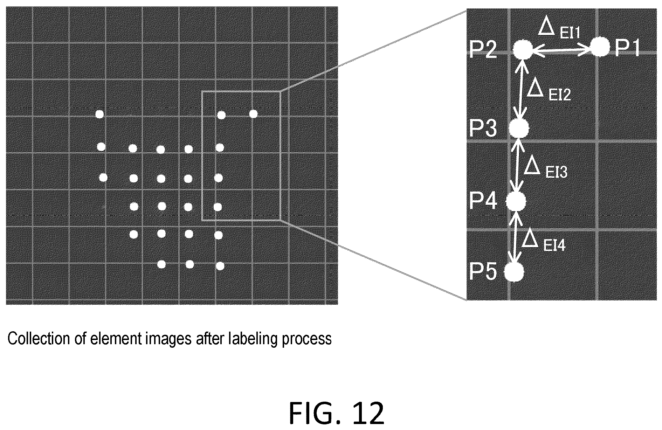

The Z coordinate of the target object at time t can be obtained directly from the intervals between the representative points of the bright spots assigned the same label in the collection of element images at time t between adjacent element images. FIG. 12 is a diagram explaining the intervals between representative points of bright spots between adjacent element images in a collection of element images. For example, as shown in the enlarged view, since the coordinates of the representative points P1 through P5 of five bright spots in the collection of element images are known in advance, the intervals Δ_{EI1}, Δ_{EI2}, Δ_{EI3}, and Δ_{EI4} between those representative points between adjacent element images can be easily obtained. If the average of the intervals Δ_{EI1}, Δ_{EI2}, Δ_{EI3}, Δ_{EI4}, ..., Δ_{EIn} between the representative points of the bright spots assigned the same label at time t between adjacent element images is expressed as Δ̅_{EIt}, then from equations (1) and (2), the Z coordinate of the target object identified by that label at time t is expressed by the following equation: ${z}_{t} = {d}_{obj} = \left(\left({\overline{Δ}}_{EIt}-{EI}_{L}\right)a-MLP*b\right) / \left({\overline{Δ}}_{EIt}-{EI}_{L}\right) {M}^{2}$

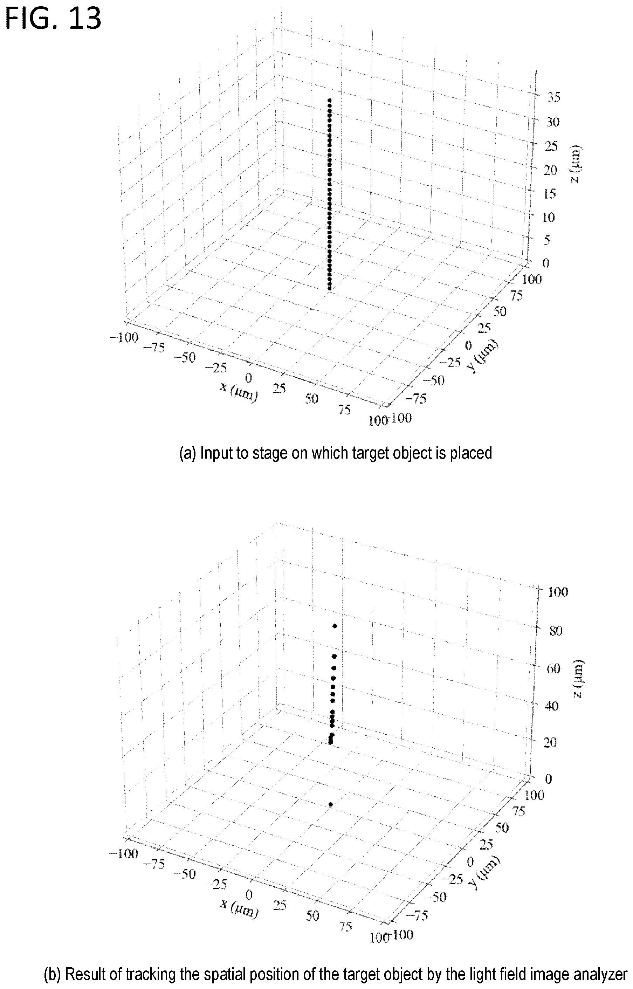

FIG. 13 is a graph showing the tracking performance in the Z direction. The tracking performance in the Z direction was confirmed by capturing with the light field camera 10 the behavior of a fluorescent particle with a radius of 2 µm when moved in the Z direction from 0 µm to 40 µm in steps of 1 µm using an XYZ motorized stage, and analyzing the light field image with the light field image analyzer 30. The Part (a) shows the input to the motorized stage on which the target object, i.e. fluorescent particle, was placed, and the part (b) shows the result of position tracking of the target object, i.e. fluorescent particle, by the light field image analyzer 30. The reason why position tracking is not performed near Z = 0, i.e. NOP, in the part (b) is that refocusing is difficult in that region due to the characteristics of the light field camera 10. For other refocusable depth positions, it can be said that the movement of the target object in the Z direction is well tracked.

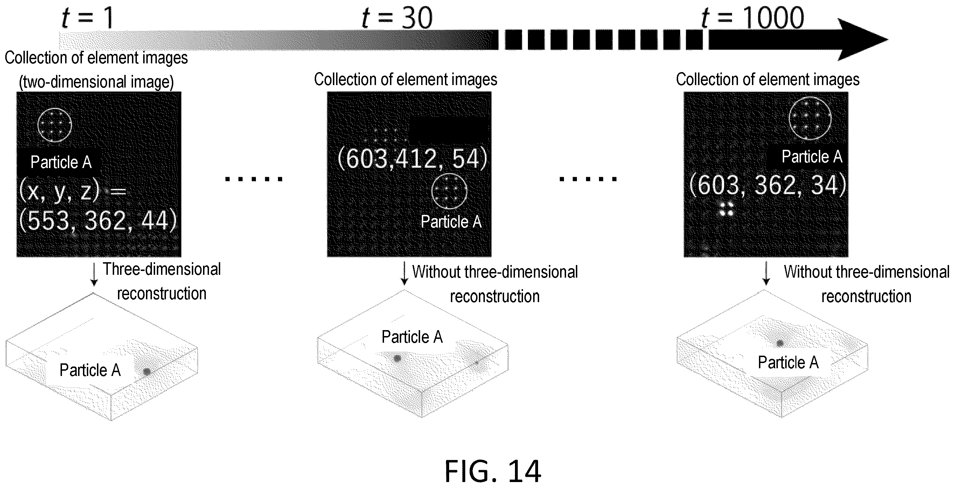

The light field image analyzer 30 three-dimensionally reconstructs the target object from the first, i.e. time t = 1, collection of element images to obtain its initial coordinates, but thereafter, i.e. from time t = 2 onward, tracks the three-dimensional spatial position of the target object solely by analyzing the two-dimensional collection of element images without three-dimensionally reconstructing the target object from the collection of element images. FIG. 14 is a diagram showing how the light field image analyzer 30 tracks a target object. For example, after obtaining the initial coordinates (x, y, z) = (553, 362, 44) of particle A, which is the target object, from the first collection of element images, the three-dimensional spatial position of particle A is tracked by analyzing the two-dimensional collection of element images without three-dimensionally reconstructing particle A.

The light field image analyzer 30 is capable of tracking the three-dimensional spatial position of a target object in a light field image from high frame rate light field images such as continuous data of collections of element images, thereby enabling observation of high-speed events such as biomolecular and intracellular behaviors. As one example, it is possible to analyze light field images at 100 fps to track the three-dimensional spatial position of a target object.

In parallel with the light field image analyzer 30 analyzing the light field image of the target object and tracking the three-dimensional spatial position of the target object in real time, the spatial light modulator controller 40 controls the spatial light modulator 64 to irradiate the light supplied from the light source 61 of the selective irradiation subsystem 60 onto the three-dimensional spatial position of the target object updated by the light field image analyzer 30.

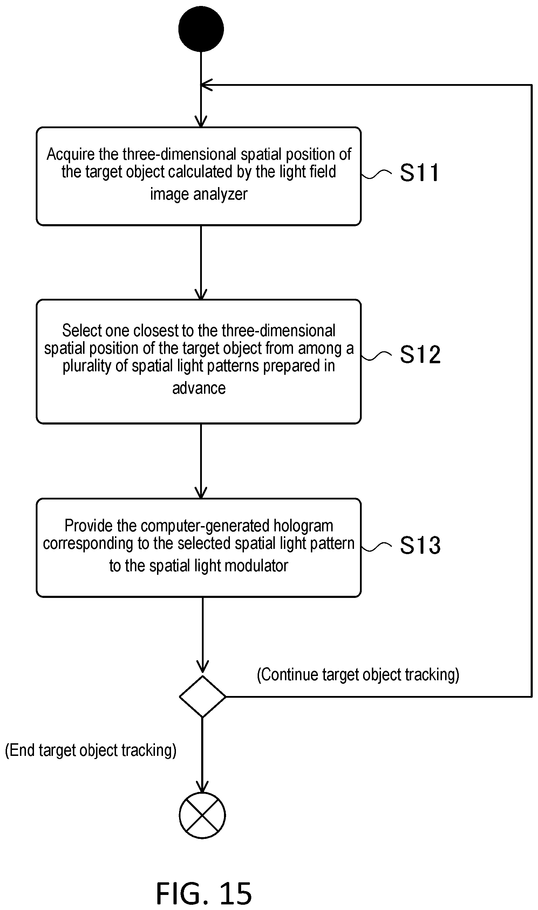

FIG. 15 is a flowchart of spatial light modulator control. When the initial coordinates of the target object are set by the light field image analyzer 30 (step S3 in FIG. 6A), or when the three-dimensional spatial position of the target object is updated (step S8 in FIG. 6B), the spatial light modulator controller 40 acquires the three-dimensional spatial position directly from the light field image analyzer 30 or via the storage device 20 (S11). Then, the spatial light modulator controller 40 references the spatial light pattern/computer-generated hologram correspondence set prepared in advance in the storage device 20, and selects the one closest to the three-dimensional spatial position of the target object from among a plurality of spatial light patterns (S12). Here, when there is a plurality of target objects, the spatial light pattern closest to the three-dimensional spatial position of each target object is selected.

The spatial light pattern/computer-generated hologram correspondence set is a data set consisting of combinations of a plurality of spatial light patterns and their corresponding computer-generated holograms. A spatial light pattern can be defined, for example, as spot light at each grid point when a rectangular region in the center of the field of view of the light field camera 10 is divided in a grid pattern. Furthermore, the rectangular region may be extended in the Z direction to define spatial light patterns representing three-dimensional grid points. Once the spatial light pattern are determined, computer-generated holograms corresponding to each spatial light pattern can be generated based on various parameters such as the optical characteristics of the objective lens 70 and the wavelength of the laser light emitted from the light source 61 of the selective irradiation subsystem 60. The storage device 20 holds such spatial light pattern/computer-generated hologram correspondence sets prepared in advance. Note that when the spatial light pattern/computer-generated hologram correspondence set is held in the HDD, it is desirable to write it out to the RAM and reference the RAM to enable high-speed retrieval.

When the spatial light modulator controller 40 selects a spatial light pattern, it provides the corresponding computer-generated hologram to the spatial light modulator 64 (S13). When there is a plurality of target objects, a computer-generated hologram obtained by combining the computer-generated holograms corresponding to each selected spatial light pattern is provided to the spatial light modulator 64. As a result, the spatial light modulator 64 performs spatial light modulation according to the provided computer-generated hologram, a desired spatial light pattern is formed on the sample in the sample holder 80 beyond the objective lens 70, and the target object in the sample is selectively irradiated with light.

### [Effects]

According to the selective irradiation system 100 according to the present embodiment, the three-dimensional spatial position of a target object can be acquired and tracked at high speed based on a light field image capturing the target object, and the target object can be irradiated with light in a pinpoint manner at high speed. This makes it possible, for example, to control the activity of a target nerve at the single-cell level while tracking a freely moving organism at high speed. In addition, since it is possible to irradiate only the target object with light while tracking the position of any target object, it is possible to reduce unnecessary background light that interferes with observation, and furthermore to improve the Signal to Background light Ratio (SBR) to observe only specific biomolecules or cells with high sensitivity.

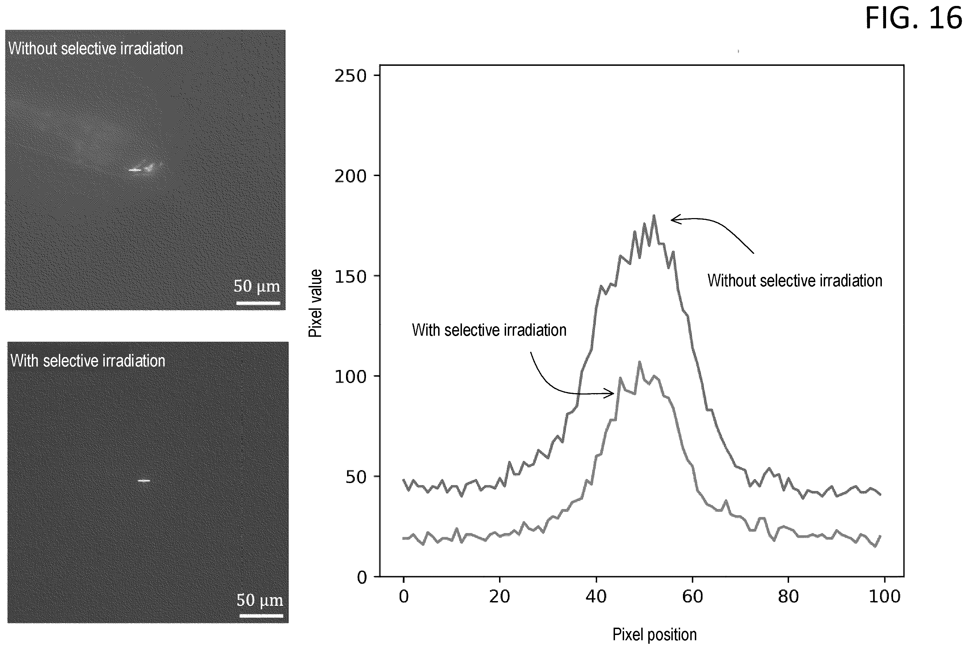

FIG. 16 is a microscope image and a profile graph of pixel values in the vicinity of a target object with and without selective irradiation. The upper left figure is a microscope image when selective irradiation is not performed on the target object, and the lower left figure is a microscope image when the target object is selectively irradiated with light by the selective irradiation system 100. These microscope images are images of a C. elegans. The field of view of these microscope images is approximately 300 µm in both vertical and horizontal directions, and in the case with selective irradiation, a substantially circular light with a diameter of 4 to 5 µm is irradiated onto the target object at a depth position of 56 µm. The right figure is a profile graph plotting the pixel values of pixels on a profile line displayed superimposed on the microscope image. The target object is located approximately at the center of the profile line, and the vertical axis of the profile graph represents the pixel value and the horizontal axis represents the position of the pixel on the profile line. The background pixel value without selective irradiation averages 46.25, whereas the background pixel value with selective irradiation averages 21.13. Selectively irradiating the target object with light can reduce unnecessary background light that interferes with observation compared to the case without selective irradiation.

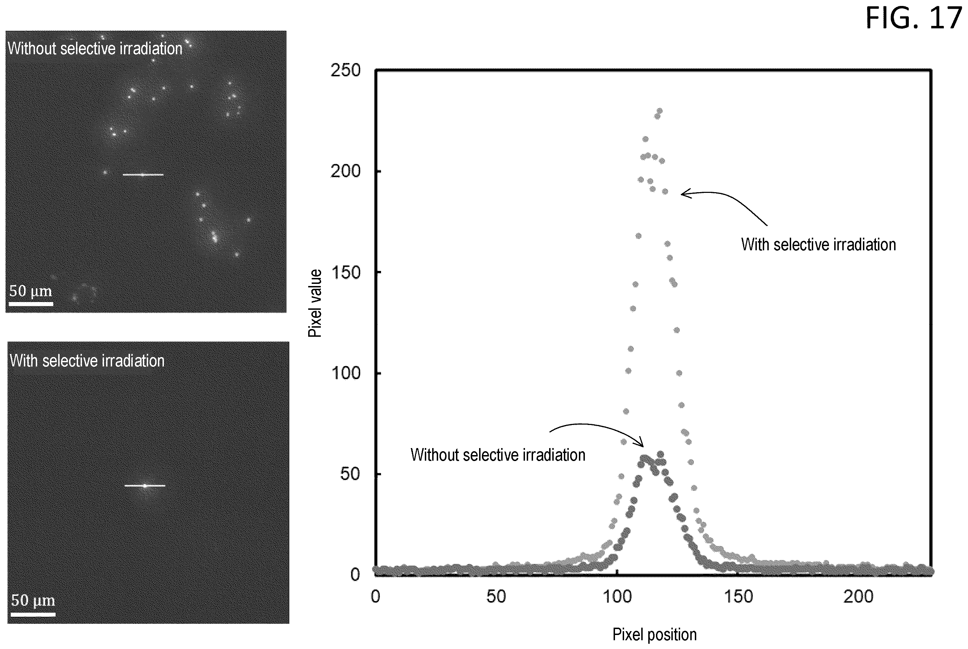

FIG. 17 is another microscope image and a profile graph of pixel values in the vicinity of a target object with and without selective irradiation. The upper left figure is a microscope image when selective irradiation is not performed on the target object, and the lower left figure is a microscope image when the target object is selectively irradiated with light by the selective irradiation system 100. These microscope images are images of fluorescent beads. The field of view of these microscope images is approximately 300 µm in both vertical and horizontal directions, and in the case with selective irradiation, a substantially circular light with a diameter of 4 to 5 µm is irradiated onto the target object at a depth position of 50 µm. The right figure is a profile graph plotting the pixel values of pixels on a profile line displayed superimposed on the microscope image. The target object is located approximately at the center of the profile line, and the vertical axis of the profile graph represents the pixel value and the horizontal axis represents the position of the pixel on the profile line. The signal pixel value without selective irradiation averages 20.8, whereas the signal pixel value with selective irradiation averages 76.5. Selectively irradiating the target object with light can reduce unnecessary background light that interferes with observation and further improve the SBR compared to the case without selective irradiation.

### [Variations]

In the above description, a reflective LCOS-SLM is used as the spatial light modulator 64, but in addition to this, a transmissive LCOS-SLM or a Digital Micromirror Device (DMD) that performs spatial light modulation using micromirrors can also be used.

In the above description, the spatial light modulator controller 40 selects a computer-generated hologram prepared in advance and provides it to the spatial light modulator 64 so that the computer-generated hologram can be switched at high speed in accordance with the movement of the target object. However, each time the light field image analyzer 30 updates the three-dimensional spatial position of the target object, a computer-generated hologram may be generated by calculation from that three-dimensional spatial position. By calculation, even when there is a plurality of target objects, a computer-generated hologram for selectively irradiating those target objects with light can be generated. However, since generating a computer-generated hologram by calculation takes more time than selecting one from those prepared in advance, it is preferable to take measures such as making the light spot irradiated onto the target object sufficiently large so that the target object does not deviate from the irradiation area even if it moves slightly, thereby avoiding the need to frequently recalculate the computer-generated hologram.

Two types of light may be emitted from the light source 51 of the wide-field illumination subsystem 50, with one used as illumination for tracking the target object and the other used as illumination for fluorescence observation of the target object. In this case, the light source 51 may alternately emit different types of light in a time-division manner, or a color filter may be placed in front of the image sensor 3 in the light field camera 10 to enable simultaneous imaging of the two types of light, or two systems of image sensors 3 for tracking and fluorescence observation may be prepared, and the light passing through the imaging lens 1 may be split and incident on each image sensor 3.

Instead of reconstructing a three-dimensional image of the target object as described in FIG. 7 and obtaining the initial coordinates of the target object from the three-dimensional image, the coordinates in three-dimensional space of the target object may be obtained directly from the image reconstructed from the first collection of element images. Since the Z coordinate of the reconstructed image is known in advance, the initial coordinates of the target object in three-dimensional space can be determined by subsequently obtaining the centroid coordinates of the target object in the reconstructed image, that is, the XY coordinates.

The template selector 32 may update the template by selecting a template not only from the first collection of element images but also from the second and subsequent collections of element images as appropriate. In particular, when there is a plurality of target objects that each rotate or change direction, it is preferable to reselect the template in the second and subsequent collections of element images.

The above description assumes that element images are arranged in a square lattice pattern in the collection of element images. However, when a microlens array in which microlenses are arranged in a honeycomb pattern is used, the element images may be arranged in a honeycomb pattern. Even in such a case, the identification of representative points of bright spots, bright spot labeling, template selection, bright spot tracking, and three-dimensional coordinates updating described above are applicable.

As described above, embodiments of the present invention have been explained as examples of the technology. For this purpose, attached drawings and detailed explanations have been provided. Therefore, among the components described in the attached drawings and detailed explanations, there may be components that are not essential for solving the problem but are included to illustrate the above technology. Accordingly, the presence of these non-essential components in the attached drawings or detailed explanations should not immediately be taken as an indication that these non-essential components are essential. Furthermore, since the above-described embodiments are for illustrating the technology of the present invention, various modifications, replacements, additions, and omissions can be made within the scope of the claims and their equivalents.

### INDUSTRIAL APPLICABILITY

The selective irradiation system according to the present invention is capable of selectively irradiating a target object with light while tracking the three-dimensional spatial position of the target object, and is therefore useful in the field of observation of high-speed events such as biomolecular and intracellular behaviors and optogenetics.

### REFERENCE NUMERALS

100: Selective irradiation system
110: Selective irradiation control device
10: Light field camera
30: Light field image analyzer
31: Image reconstructor
32: Template selector
33: Bright spot representative identifier
34: Bright spot tracker
35: Bright spot labeler
36: Three-dimensional coordinates updater
40: Spatial light modulator controller
50: Wide-field illumination subsystem
51: Light source
52: Collimator lens (optical system)
60: Selective irradiation subsystem
61: Light source
62: Collimator lens (optical system)
63: Mirror (optical system)
64: Spatial light modulator
65: Fourier transform lens (optical system)
66: DC component removal filter (optical system)

## Claims

1. A selective irradiation control device that controls a spatial light modulator that spatially modulates incident light to form a spatial light pattern, thereby selectively irradiating a target object with light, the device comprising:
a light field image analyzer configured to analyze a light field image obtained by continuously capturing images of a target object over time with a light field camera, and track a three-dimensional spatial position of the target object in the light field image; and
a spatial light modulator controller configured to generate a computer-generated hologram for forming a spatial light pattern that selectively irradiates the three-dimensional spatial position of the target object tracked by the light field image analyzer with light, and provide the generated computer-generated hologram to the spatial light modulator.

2. The selective irradiation control device according to claim 1, wherein
a combination of a plurality of spatial light patterns and computer-generated holograms corresponding thereto is prepared in advance, and
the spatial light modulator controller is configured to select one closest to the three-dimensional spatial position of the target object from among the plurality of spatial light patterns, and provide the computer-generated hologram corresponding to the selected spatial light pattern to the spatial light modulator.

3. The selective irradiation control device according to claim 2, wherein
the target object includes a plurality of target objects,
the light field image analyzer is configured to track the three-dimensional spatial position of each of the plurality of target objects, and
the spatial light modulator controller is configured to select one closest to the three-dimensional spatial position of each of the plurality of target objects from among the plurality of spatial light patterns, and provide to the spatial light modulator a computer-generated hologram obtained by combining the computer-generated holograms corresponding to the selected spatial light patterns.

4. The selective irradiation control device according to claim 1, wherein the spatial light modulator controller is configured to generate the computer-generated hologram by calculation from the three-dimensional spatial position of the target object.

5. The selective irradiation control device according to claim 4, wherein
the target object includes a plurality of target objects,
the light field image analyzer is configured to track the three-dimensional spatial position of each of the plurality of target objects, and
the spatial light modulator controller is configured to generate by calculation a computer-generated hologram for forming a spatial light pattern that selectively irradiates the three-dimensional spatial position of each of the plurality of target objects with light.

6. The selective irradiation control device according to any one of claims 1 to 5, wherein the light field image analyzer includes:
an image reconstructor configured to reconstruct an image refocused at a depth position of the target object from a collection of element images of a first light field image,
a template selector configured to select, as a template, an element image containing the most bright spots from the collection of element images of the first light field image,
a bright spot representative identifier configured to obtain a representative point of each bright spot in a collection of element images of second and subsequent light field images,
a bright spot tracker configured to obtain a positional change of the representative point of each bright spot in the collection of element images of the second and subsequent light field images,
a bright spot labeler configured to assign a label for identifying the target object to the representative point of each bright spot consisting of a collection of pixels corresponding to the target object in the reconstructed image in the collection of element images of the first light field image, and assign a same label as the representative point of each bright spot in the template to the representative point of the bright spot corresponding to the representative point of each bright spot in the template in each element image in the collection of element images of the second and subsequent light field images, and
a three-dimensional coordinates updater configured to obtain coordinates in three-dimensional space of the target object in the reconstructed image and set the coordinates as initial coordinates of the target object identified by the label, update XY coordinates of the target object identified by the label based on a positional change of representative points of bright spots assigned the same label in the collection of element images of the second and subsequent light field images, and update a Z coordinate of the target object based on intervals between the representative points between adjacent element images.

7. A selective irradiation control method for controlling a spatial light modulator that spatially modulates incident light to form a spatial light pattern, thereby selectively irradiating a target object with light, the method comprising:
analyzing, by a light field image analyzer, a light field image obtained by continuously capturing images of a target object over time with a light field camera, and tracking a three-dimensional spatial position of the target object in the light field image; and
generating, by a spatial light modulator controller, a computer-generated hologram for forming a spatial light pattern that selectively irradiates the three-dimensional spatial position of the target object tracked by the light field image analyzer with light, and providing the generated computer-generated hologram to a spatial light modulator.

8. A program for causing a computer to control a spatial light modulator that spatially modulates incident light to form a spatial light pattern, thereby selectively irradiating a target object with light, the program causing the computer to function as:
a light field image analyzer configured to analyze a light field image obtained by continuously capturing images of a target object over time with a light field camera, and track a three-dimensional spatial position of the target object in the light field image; and
a spatial light modulator controller configured to generate a computer-generated hologram for forming a spatial light pattern that selectively irradiates the three-dimensional spatial position of the target object tracked by the light field image analyzer with light, and provide the generated computer-generated hologram to the spatial light modulator.

9. A selective irradiation system, comprising:
the selective irradiation control device according to any one of claims 1 to 5;
a light field camera configured to capture a light field image of a target object and supply the light field image to the selective irradiation control device;
a wide-field illumination subsystem having a light source and an optical system, and configured to illuminate an entire field of view of the light field camera; and
a selective irradiation subsystem having a light source, an optical system, and a spatial light modulator controlled by the selective irradiation control device, and configured to selectively irradiate the target object with light.

10. A selective irradiation system, comprising:
the selective irradiation control device according to claim 6;
a light field camera configured to capture a light field image of a target object and supply the light field image to the selective irradiation control device;
a wide-field illumination subsystem having a light source and an optical system, and configured to illuminate an entire field of view of the light field camera; and
a selective irradiation subsystem having a light source, an optical system, and a spatial light modulator controlled by the selective irradiation control device, and configured to selectively irradiate the target object with light.
